Europäisches Patentamt

(19) European Patent Office

Office européen des brevets

(11) EP 0 624 319 B1

## (12) EUROPEAN PATENT SPECIFICATION

(45) Date of publication and mention
of the grant of the patent:
**30.09.1998 Bulletin 1998/40**

(51) Int. Cl.$^6$: **A23L 1/19**, A23D 7/00

(21) Application number: **94201345.9**

(22) Date of filing: **11.05.1994**

(54) **Cream rich in monounsaturated fatty acids**

Sahne mit hohem einfachungesättigte Fettsäuregehalt

Crème riche en acide gras monoinsaturés

(84) Designated Contracting States:
**AT BE CH DE DK ES FR GB GR IE IT LI LU MC NL PT SE**

(30) Priority: **14.05.1993 NL 9300847**

(43) Date of publication of application:
**17.11.1994 Bulletin 1994/46**

(73) Proprietor:
**Friesland Brands B.V.**
**8937 AC Leeuwarden (NL)**

(72) Inventors:
• **Bouma, Hette**
**NL-9001 LD Grouw (NL)**

• **Glas, Cornelis**
**NL-9255 KE Tietjerk (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**EP-A- 0 469 656**

• **CONFECTIONERY PRODUCTION, vol.51, no.7, July 1985, GB pages 403 - 404 K.LAUTSEN 'Vegetable Fats in the Dairy Industry'**

## Description

The invention relates to a cream for kitchen use, more in particular a pasteurized or sterilized stable cream product which can be used in the kitchen for preparing sauces, soups, desserts or dressings, or as garnish. It must be possible for the product to be heated, if so desired in use, without any problem while maintaining its creamy character.

In the prior art, products based on cream (milk fat) for use in the kitchen are known. These products contain, in addition to 20-50% milk fat (from cream), low-fat milk constituents and, moreover, usually contain viscosity-regulating products such as modified starch and the like, and emulsifiers and stabilizers. The fatty acid proportions in such known products can be characterized by a ratio of saturated fatty acids (SFAS) to polyunsaturated fatty acids (PUFAS) of greater than 10 and a ratio of monounsaturated fatty acids (MUFAS) to polyunsaturated fatty acids (PUFAS) of greater than 5. The percentage of monounsaturated fatty acids varies, depending on the feed regime of the lactating cow, between 15 and a maximum of 50%.

In an article of Lautsen in Confectionery Production, July 1985, 403-404, an 18%-fat coffee cream is described. In this coffee cream a product named Confao 5, can be used. When using this product, the 18%-fat coffee cream comprises 72% mono-unsaturated fatty acids (MUFAS), 22% saturated fatty acids (SFAS) and 6% poly-unsaturated fatty acids (PUFAS). 63% of the MUFAS are formed by oleic acid.

EP-A-0 469 656 describes non-dairy creams containing liquid and hardened oils (15-75 wt.% of the fatty fraction).

EP-A-0 459 562 describes a cream for kitchen use having 15-35% fat and a SFA/PUFAS ratio smaller than 4, preferably smaller than 1, based on oils predominantly containing polyunsaturated fatty acids, which oils, when unprocessed, are characterized by a MUFAS/PUFAS ratio < 1. Because of its low SFAS/PUFAS ratio, this product is said to be much healthier than the above-described known products, while the product, in spite of this low ratio, still possesses a good viscosity and taste.

For the preparation of the product according to EP-A-0 459 562, hardened soya oil, a form of so-called "hard stock" is used.

According to generally known and applied principles, the inclusion of a hard stock, i.e. a high-melting hardened fat fraction, in addition to a low-melting unsaturated fat, is a technological condition for preparing an acceptable whippable filled cream.

Compared with cream for kitchen use based on milk fat, no comparable melting range is reached and fat oxidation can occur more easily, which properties have a negative effect on the organoleptic properties of the product. Further, according to the current insights regarding food physiology, such a product has considerably drawbacks.

For instance, oils characterized by a high percentage of polyunsaturated fatty acids, such as linoleic acid and linolenic acid, have poorer physiological properties than oils characterized by a high percentage of monounsaturated fatty acids, such as oleic acid, in particular as far as the cholesterol balance in humans is concerned. For this cholesterol balance, relevant parameters are the blood serum content with regard to low density lipoprotein (LDL cholesterol) and high density lipoprotein (HDL cholesterol), and the atherogenicity or thrombogenicity. These parameters are factors which all have influence on the origin of cardiovascular diseases. For instance, there are indications that the atherogenicity is promoted more by linoleic acid and linolenic acid than by oleic acid, while in comparison with oleic acid, linoleic acid has an adverse (reducing) effect on the HDL serum cholesterol content and promotes the thrombogenicity more.

The inclusion of hard stock, prepared on the basis of hardened oils which predominantly contain unsaturated fatty acids, also involves physiological drawbacks. During hardening, cisunsaturated bonds in the fatty acids convert into transunsaturated bonds.

In comparison with cis-fatty acids, trans-fatty acids have an adverse effect on the LDL/HDL serum cholesterol proportion, because these fatty acids increase the serum LDL cholesterol content, while the HDL cholesterol content is reduced.

The object of the invention is to provide a cream for kitchen use with a creamy character, which provides an improved contribution to the limitation of the calory uptake by humans and has an improved effect on the cholesterol balance.

Surprisingly, it has been found that a cream for kitchen use of excellent technological properties can be prepared without the use of hard stock. The cream for kitchen use according to the invention is based on fatty mixtures mainly consisting of monounsaturated fatty acids, in particular oleic acid. As a result, the drawbacks related to known filled cooking creams are removed.

The cream for kitchen use according to the invention comprises an oil-in-water emulsion containing 10-25% fat, and being free of hardened fat, which fat fraction consists of milk fats and of at least 40% of a non-hardened vegetable fat type containing more than 80% oleic acid, said fat fraction comprising at least 50% monounsaturated fatty acids, the ratio of monounsaturated fatty acids (MUFAS) to polyunsaturated fatty acids (PUFAS) being greater than 5 and the ratio of saturated fatty acids (SFAS) to polyunsaturated acids (PUFAS) being greater than or equal to 1.

In the preparation of the cream for kitchen use, suitable raw materials of milk can be used, such as full-cream milk, partially skimmed milk, whey or whey derivatives, skimmed milk, sweet buttermilk, butter serum, which products may or may not have been obtained after recombination from powders, and caseinates, cream and/or water-free butterfat.

In addition, in the cream for kitchen use according to the invention, fats are included which contain a high percentage of monounsaturated fatty acids, in particular oleic acid. Generally, these fats are of vegetable origin. Suitable examples are olive oil and specific MUFA-rich sunflower oil, such as Trisun®.

The cream for kitchen use according to the invention comprises an oil-in-water emulsion which contains 10-25% fat, the fat fraction consisting of milk fats and of at least 40% of a non-hardened vegetable fat type which contains more than 80% oleic acid.

Normally, the fat fraction of the kitchen cream according to the invention will consist of a fatty mixture which preferably comprises at least 60% monounsaturated fatty acids.

To the cream for kitchen use according to the invention, milk proteins, lactose, milk minerals, stabilizers, antioxidants, thickeners, emulsifiers, flavorings and/or colorants may be added. The product may also be enriched with vitamins.

As mentioned before, the cream for kitchen use according to the invention comprises an oil-in-water emulsion. This emulsion should not exhibit sedimentation or undergo a phase separation. For this purpose, generally known stabilizers are added which also regulate the viscosity. Suitable viscosity or stability-regulating agents comprise for instance: native starch, modified starch, partially dextrinated starch, gelatin, alginate, pectin, agar-agar, gum, carrageen and/or cellulose derivatives.

Further, emulsifiers, such as monoglycerides, lecithin, phospholipids-containing liquids, for instance sweet buttermilk and butter serum, and/or sorbate esters may for instance be included.

Finally, in the cream for kitchen use according to the invention, edible organic acids and/or salts thereof may be included, while it is sometimes also advantageous to include pseudofats based on particulated protein, starch or cellulose globules.

The invention will now be further explained on the basis of the examples given below.

## Example 1

1 kg sodium caseinate was added to 88.8 kg standardized full-cream milk with cream, containing 7.7 kg fat-free milk-dry substance (ffmds). The standardized milk mixture was heated up to 70°C by means of a plate pasteurizer. Subsequently, 7.7 kg oil (Trisun®), rich in monounsaturated fatty acids, was added to this mixture and heated up to 70°C. For the fatty acid composition of the mixture of milk fat and oil, reference is made to Table 1.

Via a cavitating centrifugal pump, the mixture was fed to a two-stage homogenizer and homogenized at 140 + 30 bar, after which cooling to 10°C took place. With stirring, 2.5 kg dextrinated starch (Paselli MD20) was added to this cooled mixture, after which the mixture was sterilized at 130°C for 80 seconds and subsequently aseptically introduced into packages in appropriate amounts.

A creamy product was obtained having a neutral taste and suitable for use in a kitchen, which, when stored, remained stable for a long period, more than 6 months. This kitchen cream product contained 54% monounsaturated fatty acids in the fat fraction, while the SFAS/PUFAS and MUFAS/PUFAS ratios were 6.5 and 9.5 respectively.

## Example 2

In accordance with the process of Example 1, a product was prepared by starting from 81.1 kg skimmed milk which contained 7.9 kg ffmds, and adding to this 1 kg Na caseinate, 15.4 kg oil rich in monounsaturated fatty acids (Trisun®), and 2.5 kg dextrinated starch. An excellent creamy product was again obtained, suitable for use in a kitchen, which, when stored, remained stable for a long period, more than 6 months. The final product contained 81% monounsaturated fatty acids in the fat fraction, while the SFAS/PUFAS and MUFAS/PUFAS ratios were 1 and 9 respectively.

## Example 3

An excellently stable product was obtained as in Example 2, whereby, however, the final mixture was heated at 85°C for 10 seconds instead of at 130°C for 80 seconds for aseptically filling up in the package.

Table 1

| FATTY ACID COMPOSITION | | |
|---|---|---|
| Fatty acids | Milk fat | Oil rich in monounsaturated fatty acids |
| C 4:0 | 3.8% | |
| C 6:0 | 2.6% | |
| C 8:0 | 1.3% | |
| C10:0 | 2.9% | |
| C11:0 | 0.3 | |
| C12:0 | 3.9% | |
| C14:0 | 10.4% | |
| C15:0 | 1.0% | |
| C16:0 | 24.5% | 3.5% |
| C17:0 | 0.8% | |
| C18:0 | 11.4% | 4.0% |
| C19:O | 0.8% | |
| C20:0 | 0.1% | 0.5% |
| C22:0 | 0.1% | 1.0% |
| Σ Saturated fatty acids (SFAS) | 63.9% | 9.0% |
| C14:1 | 1.9% | |
| C16:1 | 2.8% | |
| C18:1 (oleic acid) | 21.9% | 81.0% |
| C20+22:1 | 1.0% | |
| Σ Monounsaturated fatty acids (MUFAS) | 27.6% | 81.0% |
| C18:2 (linoleic acid) | 2.0% | 9.0% |
| C18:3 (linoleic acid) | 0.5% | |
| C20:2 | | |
| Σ Polyunsaturated fatty acids (PUFAS) | 2.5% | 9.0% |
| Other | 6.0% | 1.0% |
| SFAS/PUFAS | 25 | 1 |
| MUFAS/PUFAS | 11 | 9 |

**Claims**

1. A cream for kitchen use comprising an oil-in-water emulsion, said emulsion containing 10-25% fat and being free of hardened fat, said fat fraction consisting of milk fats and of at least 40% of a non-hardened vegetable fat type containing more than 80% oleic acid, said fat fraction comprising at least 50% mono-unsaturated fatty acids and the ratio of monounsaturated fatty acids (MUFAS) to polyunsaturated fatty acids (PUFAS) being greater than 5 and the ratio of saturated fatty acids (SFAS) to polyunsaturated fatty acids (PUFAS) being greater than or equal to 1.

2. A cream for kitchen use according to claim 1, characterized in that the fat fraction is formed by a fatty mixture.

3. A cream for kitchen use according to claim 1 or 2, characterized in that the monounsaturated fatty acids consist of oleic acid.

4. A cream for kitchen use according to any one of the preceding claims, wherein the fat fraction comprises at least 60% monounsaturated fatty acids.

5. A cream for kitchen use according to any one of the preceding claims, characterized in that milk proteins, lactose, milk minerals, stabilizers, antioxidants, thickeners, emulsifiers, flavoring and/or colorants are also added.

6. A cream for kitchen use according to any one of the preceding claims, characterized in that the product is enriched with vitamins.

7. A cream for kitchen use according to any one of the preceding claims, characterized in that as a viscosity and stabilization-regulating agent, native starch, modified starch, partially dextrinated starch, gelatin, alginate, pectin, agar-agar, gum, carragene and/or cellulose derivatives are included.

8. A cream for kitchen use according to any one of the preceding claims, characterized in that as emulsifiers, monoglycerides, lecithin, phospholipids-containing liquids such as sweet buttermilk and butter serum, and/or sorbate esters are included.

9. A cream for kitchen use according to any one of the preceding claims, characterized in that an edible organic acid and/or salt thereof is included.

10. A cream for kitchen use according to any one of the preceding claims, characterized in that pseudofats based on particulated protein, starch or cellulose globules are included.

**Patentansprüche**

1. Eine Öl-in-Wasser-Emulsion enthaltende cremeartige Zusammensetzung zur Verwendung in der Küche, die 10 bis 25% Fett enthält und frei von gehärtetem Fett ist, wobei die Fettfraktion aus Milchfetten und aus mindestens 40% eines nicht gehärteten Pflanzenfetttyps besteht, der mehr als 80% Ölsäure enthält, wobei diese Fettfraktion mindestens 50% monoungesättigte Fettsäuren umfaßt und das Verhältnis von monoungesättigten Fettsäuren (MUFAS) zu polyungesättigten Fettsäuren (PUFAS) größer als 5 und das Verhältnis von gesättigten Fettsäuren (SFAS) zu polyungesättigten Fettsäuren (PUFAS) größer oder gleich 1 ist.

2. Cremeartige Zusammensetzung zur Verwendung in der Küche nach Anspruch 1, dadurch gekennzeichnet, daß die Fettfraktion aus eine Fettmischung besteht.

3. Cremeartige Zusammensetzung zur Verwendung in der Küche nach Anspruch 1 oder 2, dadurch gekennzeichnet, daß die monoungesättigten Fettsäuren aus Ölsäure bestehen.

4. Cremeartige Zusammensetzung zur Verwendung in der Küche nach einem der Ansprüche 1 bis 3, in der die Fettfraktion mindestens 60% monoungesättigte Fettsäuren umfaßt.

5. Cremeartige Zusammensetzung zur Verwendung in der Küche nach einem der vorhergehenden Ansprüche, dadurch gekennzeichnet, daß auch Milchproteine, Laktose, Milchminerale, Stabilisatoren, Antioxidationsmittel, Verdickungsmittel, Emulgatoren, Aroma- und/oder Farbstoffe hinzugefügt sind.

6. Cremeartige Zusammensetzung zur Verwendung in der Küche nach einem der vorhergehenden Ansprüche, dadurch gekennzeichnet, daß das Produkt mit Vitaminen angereichert ist.

7. Cremeartige Zusammensetzung zur Verwendung in der Küche nach einem der vorhergehenden Ansprüche, dadurch gekennzeichnet, daß als Viskositäts- und Stabilisationsteuerungsmittel natürliche Stärke, modifizierte Stärke, teilweise dextrinierte Stärke, Gelatine, Alginat, Pektin, Agar-Agar, Gumme, Karrageen und/oder Cellulosenderivate in der Zusammensetzung enthalten sind.

8. Cremeartige Zusammensetzung zur Verwendung in der Küche nach einem der vorhergehenden Ansprüche, dadurch gekennzeichnet, daß als Emulgatoren Monoglyceride, Lecithin, Phospholipide enthaltende Flüssigkeiten wie süße Buttermilch und Butterserum, und/oder Sorbatester enthalten sind.

9. Cremeartige Zusammensetzung zur Verwendung in der Küche nach einem der vorhergehenden Ansprüche, dadurch gekennzeichnet, daß eine eßbare organische Säure und/oder deren Salz enthalten ist.

10. Cremeartige Zusammensetzung zur Verwendung in der Küche nach einem der vorhergehenden Ansprüche, dadurch gekennzeichnet, daß Pseudofette enthalten sind, die auf zu Teilchen zerkleinerten Proteinen, Stärke oder Cellulosekügelchen basieren.

**Revendications**

1. Crème utile pour cuisiner constituée par une émulsion huile - dans - eau, ladite émulsion contenant 10 - 25 % de matière grasse et étant exempte de graisses durcies, ladite fraction de matière grasse étant constituée par des matières grasses de lait et par au moins 40 % d'un type de graisse végétale non durcie contenant plus de 80 % d'acide oléique, ladite fraction de matière grasse comprenant au moins 50 % d'acides gras monoinsaturés et le rapport des acides gras monoinsaturés (MUFAS) aux acides gras polyinsaturés (PUFAS) étant supérieur à 5 et le rapport des acides gras saturés (SFAS) aux acides gras polyinsaturés (PUFAS) étant supérieur ou égal à 1.

2. Crème utile pour cuisiner selon la revendication 1, caractérisée en ce que la fraction de matière grasse est formée d'un mélange de corps gras.

3. Crème utile pour cuisiner selon la revendication 1 ou 2, caractérisée en ce que les acides gras monoinsaturés sont constitués par de l'acide oléique.

4. Crème utile pour cuisiner selon une quelconque des revendications précédentes, dans laquelle la fraction de matière grasse comprend au moins 60 % d'acides gras monoinsaturés.

5. Crème utile pour cuisiner selon une quelconque des revendications précédentes, caractérisée en ce que l'on ajoute également des protéines de lait, du lactose, des minéraux du lait, des stabilisants, des antioxydants, des épaississants, des émulsifiants, des aromatisants et/ou des colorants.

6. Crème utile pour cuisiner selon une quelconque des revendications précédentes, caractérisée en ce que le produit est enrichi en vitamines.

7. Crème utile pour cuisiner selon une quelconque des revendications précédentes, caractérisée en ce qu'elle contient un agent d'ajustement de la viscosité et de la stabilisation, de l'amidon naturel, de l'amidon modifié, de l'amidon dextrinifié partiellement, de la gélatine, un alginate, de la pectine, de la gélose, une gomme, de la carragénine et/ou des dérivés de cellulose.

8. Crème utile pour cuisiner selon une quelconque des revendications précédentes, caractérisée en ce qu'elle contient en tant qu'émulsifiants des monoglycérides, de la lécithine, des liquides contenant des phospholipides tels que du babeurre doux et du sérum de beurre, et/ou des esters de sorbate.

9. Crème utile pour cuisiner selon une quelconque des revendications précédentes, caractérisée en ce qu'elle contient un acide organique comestible et/ou un de ses sels.

10. Crème utile pour cuisiner selon une quelconque des revendications précédentes, caractérisée en ce qu'elle contient des pseudograisses dérivées de globules de protéines, d' amidon ou de cellulose en particules.